# EUROPÄISCHE PATENTSCHRIFT

(11) **EP 2 888 804 B1**
(45) Veröffentlichungstag und Bekanntmachung des Hinweises auf die Patenterteilung: **24.02.2016**
(21) Anmeldenummer: 13780093.4
(22) Anmeldetag: 09.10.2013
(51) Int. Cl.: H02K 9/18

(54) **ELEKTRISCHE MASCHINE UND VERFAHREN ZUM KÜHLEN EINER ELEKTRISCHEN MASCHINE**
ELECTRIC MACHINE AND METHOD FOR COOLING AN ELECTRIC MACHINE
MACHINE ÉLECTRIQUE ET PROCÉDÉ DE REFROIDISSEMENT D'UNE MACHINE ÉLECTRIQUE

(30) Priorität: 19.10.2012 DE 102012219122
(43) Veröffentlichungstag der Anmeldung: 01.07.2015
(73) Patentinhaber: Siemens Aktiengesellschaft, 80333 München (DE)
(72) Erfinder: HÜMER, Thomas, 90451 Nürnberg (DE); RESSEL, Ekkehard, 91560 Heilsbronn (DE)
(86) Internationale Anmeldenummer: PCT/EP2013/071029
(87) Internationale Veröffentlichungsnummer: WO 2014/060255

(56) Entgegenhaltungen:
- JP-A- H0 823 661
- JP-A- H07 213 018
- JP-A- S58 215 955
- JP-U- S49 116 506
- JP-U- S61 149 956

## Beschreibung

Die vorliegende Erfindung betrifft eine elektrische Maschine. Überdies betrifft die vorliegende Erfindung ein Verfahren zum Kühlen einer elektrischen Maschine.

Um elektrische Maschinen im Betrieb effizient kühlen zu können, werden entsprechende Kühlmittelkreislaufe vorgesehen. Elektrische Maschinen, die beispielsweise nach der Kühlart IC 611 ausgebildet sind, weisen einen Innenkühlkreislauf mit einem Innenlüfter und einen Außenkühlmittelstrom mit einem Außenlüfter auf, die über einen Wärmetauscher thermisch gekoppelt sein können. Bei elektrischen Maschinen, die zwei Lüfter aufweisen, die mit der Welle der elektrischen Maschine verbunden sind, erzeugen diese Lüfter eine Axialkraft auf den gesamten Läufer. Diese Kraft, die durch die Lüfter in axialer Richtung der elektrischen Maschine erzeugt wird, tritt insbesondere bei schnelldrehenden elektrischen Maschinen auf. Die Axialkraft wird zusätzlich erhöht, wenn anstelle von zwei Radiallüftern beispielsweise ein Radiallüfter und ein Axiallüfter verwendet werden. Wenn die magnetische Rückstellkraft, die von dem Stator bzw. dem Blechpacket der elektrischen Maschine erzeugt wird, kleiner als die durch die Lüfter erzeugte Axialkraft ist, bewegt sich der ganze Läufer axial aus der geometrischen Mitte. Bei elektrischen Maschinen, die ein Festlager aufweisen, bewegt sich der Läufer um das Spiel des Festlagers bis zum Anschlag und belastet dann das Festlager mit einer zusätzlichen Axialkraft. Dieses Problem tritt auch bei elektrischen Maschinen auf, die beispielsweise ein Loslager aufweisen.

Um dem oben genannten Problem entgegenzuwirken, werden bei Leerlauftests von derartigen elektrischen Maschinen Läuferhaltevorrichtungen verwendet, um die Läufer in der geometrischen Mitte zu halten. Eine weitere Möglichkeit besteht darin, die Festlager in Betrieb der elektrischen Maschine mit einer hohen axialen Kraft zu belasten. Des Weiteren ist es bekannt, bei elektrischen Maschinen, die zwei Lüfter auf einer gemeinsamen Welle aufweisen, die Lüfter so auszubilden, dass ihre Förderrichtungen entgegengesetzt gerichtet sind. So ist beispielsweise eine vertikale elektrische Maschine bekannt, bei der der Außenlüfter im Vergleich zum Innenlüfter gedreht angeordnet ist. Damit kann diese elektrische Maschine gegenüber Regen bzw. Feuchtigkeit geschützt werden, da das Kühlmittel im Lüftergehäuse von Unten angesaugt wird.

Bei derartigen elektrischen Maschinen besteht weiterhin das Problem, dass durch die Lüfter eine hohe Geräuschentwicklung entsteht. Zudem besteht die Gefahr, dass bei dem Außenkühlmittelstrom die erwärmte Abluft wieder über die Eintrittsöffnung des Lüftergehäuses des Außenlüfters eingesaugt wird.

Das Dokument JP S58 215955 A offenbart eine elektrische Maschine mit einem Innenlüfter in einem Innenkühlkreislauf und einen Außenlüfter zum Erzeugen eines vom Innenkühlkreislauf getrennten Außenkühlmittelstromes. Der Innenlüfter und der Außenlüfter sind mit einer gemeinsamen Welle der elektrischen Maschine miteinander verbunden. Der Außenlüfter ist ein Radialventilator.

Das Dokument JP S61 149956 U offenbart eine elektrische Maschine mit einem Innenlüfter in einem Innenkühlkreislauf und einen Außenlüfter zum Erzeugen eines vom Innenkühlkreislauf getrennten Außenkühlmittelstromes. Der Innenlüfter und der Außenlüfter sind mit einer gemeinsamen Welle der elektrischen Maschine miteinander verbunden. Der Außenlüfter ist ein Radialventilator und eine Eintrittsöffnung des Außenkühlmittelstromes ist an der Antriebsseite der elektrischen Maschine angeordnet.

In dem Dokument JP S49 116506 U wird eine elektrische Maschine mit einem Innenlüfter in einem Innenkühlkreislauf und einen Außenlüfter zum Erzeugen eines vom Innenkühlkreislauf getrennten Außenkühlmittelstromes offenbart. Der Innenlüfter und der Außenlüfter sind mit einer gemeinsamen Welle der elektrischen Maschine miteinander verbunden. Der Außenlüfter ist ein Radialventilator.

Aus dem Dokument JP H08 23661 A geht ebenfalls eine elektrische Maschine mit einem Innenlüfter in einem Innenkühlkreislauf und einem Außenlüfter zum Erzeugen eines vom Innenkühlkreislauf getrennten Außenkühlmittelstromes hervor. Der Innenlüfter und der Außenlüfter sind mit einer gemeinsamen Welle der elektrischen Maschine miteinander verbunden. Der Außenlüfter ist ein Radialventilator.

Weiterhin ist aus dem Dokument JP H07 213018 A eine elektrische Maschine mit einem Innenlüfter in einem Innenkühlkreislauf und einem Außenlüfter zum Erzeugen eines vom Innenkühlkreislauf getrennten Außenkühlmittelstromes bekannt. Weiterhin ist der Außenlüfter in einem Lüftergehäuse angeordnet, welches eine Eintrittsöffnung zum Einströmen eines Kühlmittels des Außenkühlmittelstroms aufweist. Der Außenkühlmittelstrom strömt in Förderrichtung des Außenlüfters.

Es ist daher Aufgabe der vorliegenden Erfindung eine elektrische Maschine bereitzustellen, die effizienter und flexibler betrieben werden kann.

Diese Aufgabe wird durch eine elektrische Maschine mit den Merkmalen des Patentanspruchs 1 und ein Verfahren mit den Merkmalen des Patentanspruchs 5 gelöst. Vorteilhafte Weiterbildungen der vorliegenden Erfindung sind Gegenstand der Unteransprüche.

Die erfindungsgemäße elektrische Maschine umfasst einen Innenlüfter in einem Innenkühlkreislauf, einen Außenlüfter zum Erzeugen eines vom Innenkühlkreislauf getrennten Außenkühlmittelstroms, wobei der Innenlüfter und der Außenlüfter mit einer gemeinsamen Welle der elektrischen Maschine verbunden sind, der Innenlüfter und der Außenlüfter entlang einer axialen Richtung der elektrischen Maschine entgegengesetzte Förderrichtungen aufweisen, der Außenlüfter in einem Lüftergehäuse angeordnet ist, das eine Eintrittsöffnung zum Einströmen eines Kühlmittels des Außenkühlmittelstroms aufweist und wobei das Lüftergehäuse eine Luftleiteinrichtung umfasst, die das Kühlmittel in einem Leitungsabschnitt, der sich in radialer Richtung der elektrischen Maschine von der Eintrittsöffnung zu dem Außenlüfter hin erstreckt, führt. Die Luftleiteinrichtung ist durch eine Innenwand des Lüftergehäuses und ein Luftleitelement gebildet. Ein Teil der Luftleiteinrichtung kann durch einen Wand des Lüftergehäuses gebildet sein. Diese Wand kann sich in radialer Richtung der elektrischen Maschine erstrecken. Zudem kann die Wand eine entsprechende Aussparung aufweisen, durch die die Welle geführt ist. Der zweite Teil der Luftleiteinrichtung kann durch ein Luftleitblech gebildet sein. Das Luftleitblech kann einen ersten Bereich aufweisen, der sich ausgehend von der Eintrittsöffnung des Lüftergehäuses in radialer Richtung erstreckt. Zudem kann das Luftleitblech einen zweiten Bereich aufweisen, der an eine Außenseite des Außenlüfters anschließt. Der zweite Bereich kann sich im Wesentlichen in axialer Richtung der elektrischen Maschine erstrecken. Zwischen dem ersten und dem zweiten Bereich kann das Luftleitblech einen Zwischenbereich aufweisen, der eine entsprechende Krümmung aufweist. Durch die Formgebung des Luftleitblechs kann die Umlenkung des Kühlmittelstroms in dem Lüftergehäuse begünstigt werden. Damit kann die vom Außenlüfter erzeugte Axialkraft so angepasst werden, dass sie der Axialkraft des Innenlüfters entgegen wirkt. Somit kann die Belastung der Lager reduziert werden. Weiterhin umfasst das Lüftergehäuse eine weitere Luftleiteinrichtung, die derart an einer Außenfläche des Lüftergehäuses angeordnet ist, dass sich zwischen der Außenfläche des Lüftergehäuses und einer Innenwand der weiteren Luftleiteinrichtung ein in axialer Richtung verlaufender Kanal ausbildet. Dabei ist die weitere Luftleiteinrichtung derart ausgebildet sein, dass das Kühlmittel in axialer Richtung entgegengesetzt gerichtet zu der Förderrichtung des Außenlüfters durch den Kanal strömt. Die weitere Luftleiteinrichtung kann als Anbauteil ausgebildet sein, die beispielsweise mit einer Schraubverbindung oder einer Schweißverbindung an der Außenfläche des Lüftergehäuses befestigt ist. Die weitere Luftleiteinrichtung weist eine Eintrittsöffnung auf, durch die das Kühlmittel bzw. die Außenluft einströmen kann. In der weiteren Luftleiteinrichtung strömt das Kühlmittel ausgehend von der Eintrittsöffnung der weiteren Luftleiteinrichtung zu der Eintrittsöffnung des Lüftergehäuses. Wie zuvor beschrieben, strömt das Kühlmittel dann von der Eintrittsöffnung des Lüftergehäuses in radialer Richtung zu dem Außenlüfter und wird dort in axialer Richtung abgelenkt. Durch die geometrische Ausgestaltung der weitern Luftleiteinrichtung kann zusätzlich verhindert werden, dass die von dem Außenlüfter erzeugten Geräusche nach außen dringen. Durch die weitere Luftleiteinrichtung kann eine - insbesondere bezüglich der axialen Ausdehnung der elektrischen Maschine - bauraumsparende Vorrichtung zur Schalldämmung bereitgestellt werden. Weiterhin führt der Außenkühlmittelstrom von dem Außenlüfter durch ein Kühlergehäuse der elektrischen Maschine, wobei eine Austrittsöffnung des Kühlergehäuses beabstandet zu der Eintrittsöffnung der Luftleiteinrichtung angeordnet ist. Die Eintrittsöffnung der Luftleiteinrichtung bzw. der weiteren Luftleiteinrichtung sollte möglichst weit entfernt von der Austrittsöffnung des Kühlergehäuses angeordnet sein. Die Austrittsöffnung ist in einem Bereich der Antriebseite der elektrischen Maschine angeordnet und die Eintrittsöffnung der Luftleiteinrichtung bzw. der weiteren Luftleiteinrichtung ist an der Nicht-Antriebsseite der elektrischen Maschine angeordnet. Somit kann verhindert werden, dass die erwärmte Luft, die aus der Austrittsöffnung austritt wieder in die entsprechende Eintrittsöffnung ein gesaugt wird. Damit kann eine effektive Kühlung der elektrischen Maschine ermöglicht werden. Das Kühlmittel wird durch die Luftleiteinrichtung in die radiale Richtung zu der Welle hin zu dem Außenlüfter geführt und anschließend von dem Außenlüfter in die axiale Richtung umgelenkt.

Die elektrische Maschine ist insbesondere als schnelldrehende elektrische Maschine ausgebildet. Beispielsweise kann die elektrische Maschine als Asynchronmaschine mit einem Käfigläufer ausgebildet sein. Die elektrische Maschine kann nach der Kühlart IC 611 ausgebildet sein, d. h. die elektrische Maschine kann zwei voneinander getrennte Kühlkreisläufe bzw. Kühlmittelströme aufweisen, die über einen Wärmetauscher thermisch gekoppelt sind. Als Kühlmittel kann insbesondere Luft verwendet werden. Alternativ oder zusätzlich kann die elektrische Maschine eine Wasserkühlung aufweisen. Das Kühlmittel in dem Innenkühlkreislauf wird mit einem Innenlüfter gefördert. Das Kühlmittel in dem Außenkühlstrom wird mit einem Außenlüfter bewegt, der in einem separaten Lüftergehäuse angeordnet ist. Das Lüftergehäuse weist eine Eintrittsöffnung auf, durch die das Kühlmittel einströmen kann. Von dem Lüftergehäuse kann das Kühlmittel in ein Kühlergehäuse der elektrischen Maschine geführt werden, in dem sich der Wärmetauscher befindet.

In dem Lüftergehäuse ist eine Luftleiteinrichtung vorgesehen, mit der das Kühlmittel bzw. die Luft ausgehend von der Eintrittsöffnung zu dem Außenlüfter hin in radialer Richtung der elektrischen Maschine geführt wird. Durch den Außenlüfter wird das Kühlmittel in die axiale Richtung umgelenkt. Dazu kann die Eintrittsöffnung an einer Außenfläche des Lüftergehäuses angeordnet sein. Es können auch mehrere, beispielsweise zwei, Eintrittsöffnungen in dem Lüftergehäuse vorgesehen sein. Die Eintrittsöffnungen können sich bei einer bestimmungsgemäßen Aufstellung der elektrischen Maschine an einem Seitenbereich oder an der Unterseite des Lüftergehäuses befinden. Der Außenlüfter ist in axialer Richtung versetzt zu dem Leitungsabschnitt, der durch die Luftleiteinrichtung gebildet ist, angeordnet. Durch die Ausgestaltung der Luftleitvorrichtung kann erreicht werden, dass das von dem Außenlüfter erzeugte Geräusch weniger nach außen dringt.

In einer weiteren Ausführungsform sind die weitere Luftleiteinrichtung und das Lüftergehäuse einteilig ausgebildet. Damit kann eine Gehäuseeinrichtung für den Außenlüfter bereitgestellt werden, mit der die Geräuschentwicklung der elektrischen Maschine reduziert werden kann. Zudem kann durch die einteilige Ausgestaltung des Lüftergehäuses und der weiteren Luftleiteinrichtung der Montageaufwand reduziert werden. Bevorzugt ist an einer Innenwand der weiteren Luftleiteinrichtung und/oder an einer Innenwand des Lüftergehäuses ein Geräuschdämmelement angeordnet. Entsprechende Geräuschdämmelemente, die aus einem Kunststoff, Steinwolle oder dergleichen gebildet sein können, können einfach - beispielsweise durch eine Klebeverbindung - an den Innenwänden der weiteren Luftleiteinrichtung und/oder des Lüftergehäuses angebracht werden. Somit kann auf einfache Weise die Geräuschentwicklung der elektrischen Maschine zusätzlich reduziert werden.

In einer Ausgestaltung ist an der Eintrittsöffnung des Lüftergehäuses und/oder an der Eintrittsöffnung der weiteren Luftleiteinrichtung ein Gitterelement angeordnet. Das Gitterelement kann durch eine Metallgitter oder ein Netz gebildet sein. Damit kann verhindert werden, dass Fremdkörper eingesaugt werden, die zu einer Beschädigung des Außenlüfters führen können.

Schließlich wird erfindungsgemäß bereitgestellt ein Verfahren zum Kühlen einer elektrischen Maschine, wobei die elektrische Maschine einen Innenlüfter und einen Außenlüfter aufweist, die mit einer gemeinsamen Welle der elektrischen Maschine verbunden sind, der Innenlüfter und der Außenlüfter entlang einer axialen Richtung der elektrischen Maschine entgegengesetzte Förderrichtungen aufweisen und der Außenlüfter in einem Lüftergehäuse angeordnet ist, das eine Eintrittsöffnung zum Einströmen eines Kühlmittels des Außenkühlmittelstroms aufweist durch Erzeugen eines Innenkühlkreislaufs mit dem Innenlüfter, Erzeugen eines vom Innenkühlkreislauf getrennten Außenkühlmittelstroms mit dem Außenlüfter, Bilden der Luftleiteinrichtung durch eine Innenwand des Lüftergehäuses und ein Luftleitelement, Umfassen einer weiteren Luftleiteinrichtung des Lüftergehäuses, die derart an einer Außenfläche des Lüftergehäuses angeordnet ist, dass sich zwischen der Außenfläche des Lüftergehäuses und einer Innenwand der weiteren Luftleiteinrichtung ein in axialer Richtung verlaufender Kanal ausbildet, Einströmen des Kühlmittels im Wesentlichen entlang der axialen Richtung der elektrischen Maschine in den Kanal von einer Eintrittsöffnung der weiteren Luftleiteinrichtung, Strömen des Kühlmittels in axialer Richtung entgegengesetzt gerichtet zu der Förderrichtung des Außenlüfters durch den Kanal der weitere Luftleiteinrichtung, Führen des Kühlmittels in einem Leitungsabschnitt, der sich in radialer Richtung der elektrischen Maschine von der Eintrittsöffnung zu dem Außenlüfter hin erstreckt mit einer Luftleiteinrichtung des Lüftergehäuses, Anordnen der Austrittsöffnung in einem Bereich der Antriebsseite der elektrischen Maschine und der Eintrittsöffnung an der Nicht-Antriebsseite der elektrischen Maschine, und Umlenken des Kühlmittels von dem Außenlüfter in die axiale Richtung.

Die zuvor im Zusammenhang mit der erfindungsgemäßen elektrischen Maschine beschriebenen Vorteile und Weiterbildungen können in gleicher Weise auf das erfindungsgemäße Verfahren übertragen werden.

Die vorliegende Erfindung wird nun anhand der beigefügten Zeichnungen näher erläutert. Dabei zeigen:
- FIG 1: eine elektrische Maschine in einer schematischen geschnittenen Ansicht;
- FIG 2: eine elektrische Maschine in einer weiteren Ausführungsform;
- FIG 3: eine Gehäuseeinrichtung für eine elektrische Maschine;
- FIG 4: eine Gehäuseeinrichtung für eine elektrische Maschine in einer weiteren Ausführungsform;
- FIG 5: eine Gehäuseeinrichtung für eine elektrische Maschine in einer weiteren Ausführungsform;
- FIG 6: eine Gehäuseeinrichtung für eine elektrische Maschine in einer weiteren Ausführungsform;
- FIG 7: eine Gehäuseeinrichtung für eine elektrische Maschine in einer weiteren Ausführungsform;
- FIG 8: eine Gehäuseeinrichtung für eine elektrische Maschine in einer weiteren Ausführungsform; und
- FIG 9: eine perspektivische Darstellung einer Gehäuseeinrichtung für eine elektrische Maschine in einer weiteren Ausführungsform.

Die nachfolgend näher geschilderten Ausführungsbeispiele stellen bevorzugte Ausführungsformen der vorliegenden Erfindung dar.

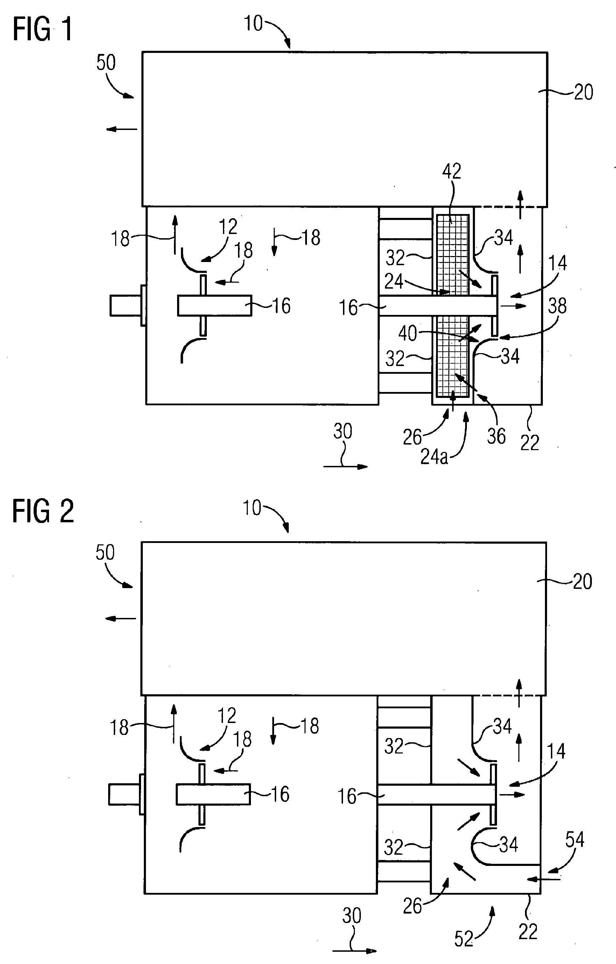

FIG 1 zeigt eine schematische Darstellung einer elektrischen Maschine 10 in einer geschnittenen Ansicht von der Seite. Die elektrische Maschine 10 kann als Asynchronmaschine mit einem Kurzschlusskäfig ausgebildet sein. Die elektrische Maschine 10 weist einen Innenlüfter 12 und einen Außenlüfter 14 auf. Der Innenlüfter 12 und der Außenlüfter 14 sind auf einer gemeinsamen Welle 16 angeordnet. Zudem weisen der Innenlüfter 12 und der Außenlüfter 14 entgegengesetzte Förderrichtungen auf. Der Innenlüfter 12 und der Außenlüfter 14 können als Radial oder Axiallüfter ausgebildet sein. Der Innenlüfter 12 dient zur Kühlung des hier nicht dargestellten Ständers und des Läufers, die zu diesem Zweck entsprechende Kühlkanäle aufweisen. Der prinzipielle Verlauf der durch den Innenlüfter 12 gebildeten Innenkühlkreislaufs ist durch die Pfeile 18 verdeutlicht. Der Innenkühlkreislauf führt über einen hier nicht dargestellten Wärmetauscher, der in einem Kühlergehäuse 20 angeordnet ist.

Der Außenlüfter 14 ist in einem Lüftergehäuse 22 angeordnet und fördert das Kühlmittel bzw. die Luft eines Außenkühlmittelstroms, der getrennt zu dem Innenkühlkreislauf ist. Dazu weist das Lüftergehäuse 22 eine entsprechende Eintrittsöffnung 24 auf, durch die die Luft von außen seitlich, senkrecht zur Zeichenebene von FIG 1 in das Innere des Lüftergehäuses 22 strömt. Von der Eintrittsöffnung 24 strömt das Kühlmittel in das Kühlergehäuse 20 und über den Wärmetauscher. In dem Kühlergehäuse 20 ist eine hier nicht dargestellte Trennwand vorgesehen, um den Innenkühlkreislauf vom Außenkühlmittelstrom zu trennen. Das Kühlmittel tritt an einer Austrittsöffnung 50 des Kühlergehäuses 20 aus.

In dem Lüftergehäuse 22 ist eine Luftleiteinrichtung 26 vorgesehen, mit der das Kühlmittel in einem Leitungsabschnitt, der sich in radialer Richtung der elektrischen Maschine 10, also in eine Richtung zur Welle 16 hin, von der Eintrittsöffnung 24 zu dem Außenlüfter 14 hin erstreckt, geführt wird. Die Luftleiteinrichtung 26 ist durch eine Innenwand 32 des Lüftergehäuses 22 und durch ein Luftleitelement 34 gebildet. Die Innenwand 32 erstreckt in radialer Richtung der elektrischen Maschine 10, also radial zur Welle 16 hin. Das Luftleitelement 34 weist einen ersten Bereich 36 auf, der sich von der Eintrittsöffnung 24 ausgehend in radialer Richtung zur Welle 16 hin erstreckt. Zudem weist das Luftleitelement 34 einen zweiten Bereich 38 auf, der sich in axialer Richtung 30 zu einer Außenseite des Außenlüfters 14 erstreckt. Zwischen dem ersten Bereich 36 und dem zweiten Bereich 38 weist das Luftleitelement 34 einen Zwischenbereich 40 auf, der eine entsprechende Krümmung aufweist. Vorliegend ist die Eintrittsöffnung 24 an der seitlichen Außenwand des Lüftergehäuses 22 angeordnet. Zusätzlich oder alternativ dazu kann eine Eintrittsöffnung 24a an der Unterseite des Lüftergehäuses 22 vorgesehen sein. An der Eintrittsöffnung 24 ist ein Gitterelement 42 angeordnet, durch das verhindert werden kann, dass Fremdkörper in den Außenkühlmittelstrom gelangen.

Die in FIG 1 gezeigte elektrische Maschine ist eine Ausführungsvariante, bei welcher auf eine Luftleiteinrichtung an der seitlichen Außenfläche des Lüftergehäuses verzichtet worden ist und bei welcher Geräuschdämmung keine große Rolle spielt.

FIG 2 zeigt dagegen eine Ausführungsvariante einer elektrischen Maschine, bei welcher eine axiale Luftansaugung in Form einer weiteren Luftleiteinrichtung 52 in ein Lüftergehäuse 22 integriert ist. Hierdurch ergibt sich eine verbesserte Geräuschdämmung ohne zusätzliche seitliche Anbauteile.

FIG 2 zeigt eine elektrische Maschine 10 in einer weiteren Ausführungsform in einer teilweise geschnittenen, schematischen Seitenansicht. Auch hier wird das Kühlmittel durch eine Luftleiteinrichtung 26 in radialer Richtung zu einer Welle 16 hin zu dem Außenlüfter 14 geführt und anschließend von dem Außenlüfter 14 in die axiale Richtung 30 umgelenkt. Durch ein Luftleitelement 34 wird die Umlenkung des Kühlmittelstroms begünstigt. Das Luftleitelement 34 trennt dabei das angesaugte Kühlmittel vom durch den Außenlüfter 14 umgelenkten Kühlmittel. Eine Eintrittsöffnung 54 für den Kühlmittelstrom weist hier nicht zu einer Seite quer von einer Rotationsachse der Welle 16 weg (siehe FIG 1), sondern entlang der axialen Richtung der Welle 16 nach vorn in die nicht-antriebsseitige Richtung. Die Eintrittsöffnung 54 ist im Lüftergehäuse 22 integriert. Das Kühlmittel wird angesaugt und strömt in axialer Richtung durch eine in das Lüftergehäuse 22 integrierte, weitere Luftleiteinrichtung 52 zunächst in axialer Richtung 30 zu der Luftleiteinrichtung 26. Durch die beschriebene Anordnung der Eintrittsöffnung 54 der weiteren Luftleiteinrichtung 52 relativ zu der Austrittsöffnung 50 des Kühlergehäuses 20 kann effektiv verhindert werden, dass das erwärmte Kühlmittel, das aus der Austrittsöffnung 50 ausströmt wieder durch die Eintrittsöffnung 54 eingesogen wird.

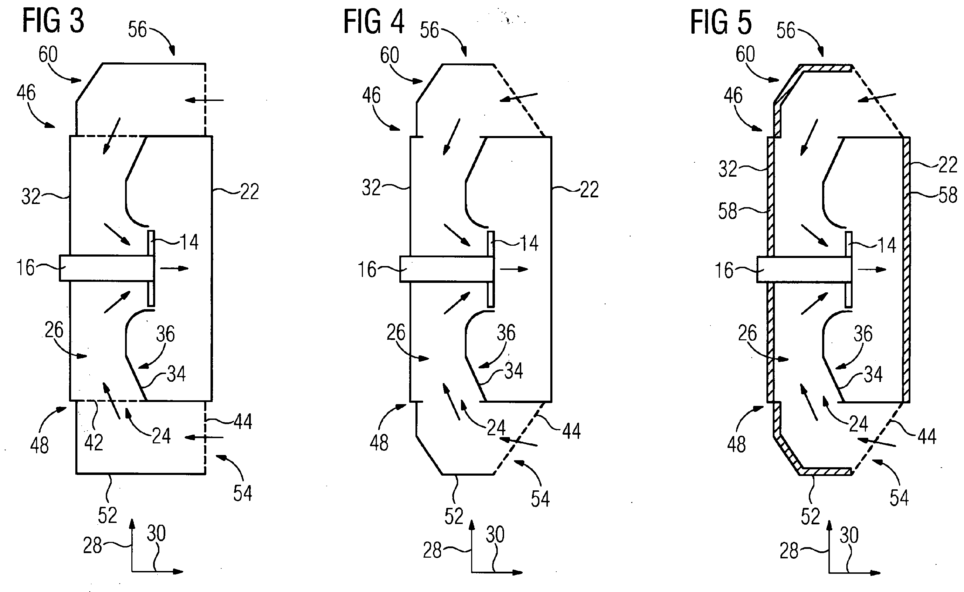

Anhand von FIG 3 bis FIG 9 sind im Folgenden elektrischen Maschinen beschrieben, bei welchen eine Luftleiteinrichtung 52 als Anbauteil an einer seitlichen Außenfläche eines Lüftergehäuses 22 bereitgestellt ist. Durch diese Anbauteile ergibt sich eine verbesserte Dämmung von Geräuschen eines Außenlüfters.

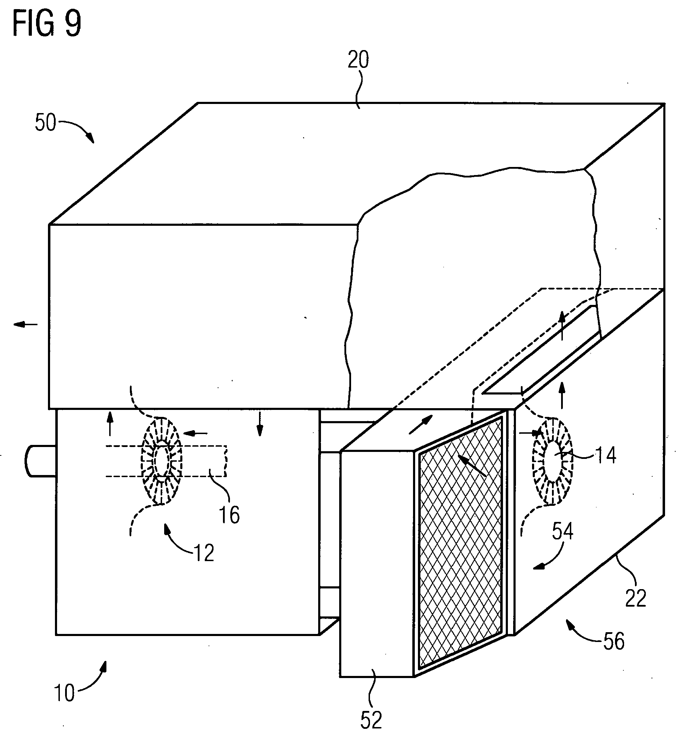

Die FIG 3 bis 8 zeigen schematische Darstellungen von Gehäuseeinrichtungen 56 für elektrische Maschinen 10 in einer jeweiligen Draufsicht. FIG 9 zeigt eine schematische Darstellung einer teilweise geschnittenen, perspektivischen Ansicht einer elektrischen Maschine 10 mit einem Lüftergehäuse 22 und einem daran befestigten seitlichen Anbau als Luftleiteinrichtung 52, die zusammen eine Gehäuseeinrichtung 56 bilden.

In FIG 3 bis FIG 8 sind die erste Seite 46 und die zweite Seite 48 teilweise unterschiedlich ausgebildet. Dies bedeutet nicht zwingend, dass die beiden Seiten 46 und 48 der jeweiligen Gehäuseeinrichtung 56 unterschiedlich ausgebildet sein sollen. Dies dient vielmehr der Verdeutlichung der verschiedenen Ausführungsformen der Gehäuseeinrichtungen 56.

FIG 3 zeigt eine Gehäuseeinrichtung 56 in einer ersten Ausführungsform. FIG 9 zeigt die Gehäuseeinrichtung 56 in einer perspektivischen Ansicht. Hierbei, wie auch in den nachfolgenden Ausführungsbeispielen, weist das Luftleitelement 34 im Vergleich zu den in FIG 1 und 2 gezeigten Ausführungsformen in dem ersten Bereich 36 eine Neigung auf. An dem Lüftergehäuse 22 ist eine weitere Luftleiteinrichtung 52 angeordnet. Die weitere Luftleiteinrichtung 52 kann mit einer Schraubverbindung oder einer Schweißverbindung an dem Lüftergehäuse 22 befestigt sein. Durch die Eintrittsöffnung 54, das durch ein Gitterelement 44 geschützt ist, kann das Kühlmittel bzw. die Luft von außen in die weitere Luftleiteinrichtung 52 einströmen. Die Luft strömt in axialer Richtung 30 zu der Eintrittsöffnung 24 des Lüftergehäuses 22. Von dort wird es durch die Luftleiteinrichtung 26 in radialer Richtung 28 zu dem Außenlüfter 14 geführt. Anschließend wird das Kühlmittel von dem Außenlüfter 14 in die axiale Richtung 30 umgelenkt. Durch die Ausgestaltung der Luftleiteinrichtung 26 und der weiteren Luftleiteinrichtung 52 kann verhindert werden, dass Geräusche bzw. Schall von dem Außenlüfter 14 nach außen gelangen, da der Schall an den Wänden der Luftleiteinrichtung 26 und der weiteren Luftleiteinrichtung 52 reflektiert wird. In dem vorliegenden Ausführungsbeispiel weist die weitere Luftleiteinrichtung 52 an der zweiten Seite 48 der Gehäuseeinrichtung 56 einen rechteckigen Querschnitt auf. An der ersten Seite 46 der Gehäuseeinrichtung 56 ist die weitere Luftleiteinrichtung 52 in einem der Eintrittsöffnung 24 gegenüberliegenden Bereich 60 abgeschrägt ausgebildet. Durch die Abschrägung kann erreicht werden, dass der Kühlmittelstrom besser von der weiteren Luftleiteinrichtung 52 in die Luftleiteinrichtung 26 des Lüftergehäuses 22 geleitet wird.

FIG 4 zeigt eine Gehäuseeinrichtung 56 in einer weiteren Ausführungsform. Hier weist die weitere Luftleiteinrichtung 52 an der ersten Seite 46 und an der zweiten Seite 48, wie im Zusammenhang mit FIG 3 beschrieben, in dem Bereich 60 jeweils eine Abschrägung auf. Bei dem in FIG 4 gezeigten Ausführungsbeispiel verlaufen die Eintrittsöffnungen 54 der weitere Luftleiteinrichtung 52 schräg zwischen der radialen Richtung 28 und der axialen Richtung 30. Dadurch kann das Einströmen des Kühlmittels in die weitere Luftleiteinrichtung 52 verbessert werden.

FIG 5 zeigt eine Gehäuseeinrichtung 56 in einer weiteren Ausführungsform. Hier ist die Ausführungsform gemäß FIG 4 dadurch weitergebildet, dass an den Innenwänden des Lüftergehäuses 22 und der weiteren Luftleiteinrichtung 52 jeweils Geräuschdämmelemente 58 angeordnet sind.

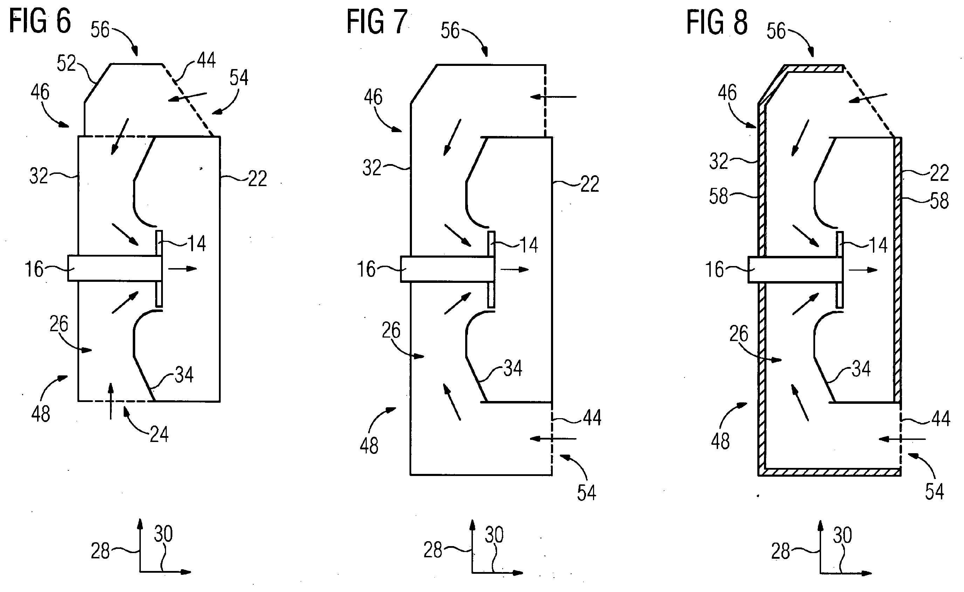

In FIG 6 ist eine weitere Ausführungsform einer Gehäuseeinrichtung 56 gezeigt, bei der die erste Seite 46 gemäß der Ausführungsform von FIG 4 ausgebildet ist. An der zweiten Seite 48 ist keine zweite Luftleiteinrichtung 52 angeordnet. Auf die zweite Luftleiteinrichtung 52 kann beispielsweise verzichtet werden, wenn keine Geräuschdämpfung erforderlich ist.

FIG 7 zeigt eine Gehäuseeinrichtung 56, bei geometrisch wie die Gehäuseeinrichtung 56 gemäß FIG 3 ausgebildet ist. Hier sind das Lüftergehäuse 22 und die weitere Luftleiteinrichtung 52 einteilig ausgebildet. FIG 8 zeigt die Gehäuseeinrichtung 56 gemäß FIG 7 mit zusätzlichen Geräuschdämmelementen 58.

## Patentansprüche

1. Elektrische Maschine (10) mit
- einem Innenlüfter (12) in einem Innenkühlkreislauf,
- einem Außenlüfter (14) zum Erzeugen eines vom Innenkühlkreislauf getrennten Außenkühlmittelstroms, wobei
- der Innenlüfter (12) und der Außenlüfter (14) mit einer gemeinsamen Welle (16) der elektrischen Maschine (10) verbunden sind,
- der Innenlüfter (12) und der Außenlüfter (14) entlang einer axialen Richtung (30) der elektrischen Maschine (10) entgegengesetzte Förderrichtungen aufweisen und
- der Außenlüfter (14) in einem Lüftergehäuse (22) angeordnet ist, das eine Eintrittsöffnung (24) zum Einströmen eines Kühlmittels des Außenkühlmittelstroms aufweist, wobei
- das Lüftergehäuse (22) eine Luftleiteinrichtung (26) umfasst, die das Kühlmittel in einem Leitungsabschnitt, der sich in radialer Richtung (28) der elektrischen Maschine (10) von der Eintrittsöffnung (24) zu dem Außenlüfter (14) hin erstreckt, führt,
- die Luftleiteinrichtung (26) durch eine Innenwand (32) des Lüftergehäuses (22) und ein Luftleitelement (34) gebildet ist,
- das Lüftergehäuse (22) eine weitere Luftleiteinrichtung (52) umfasst, die derart an einer Außenfläche des Lüftergehäuses (22) angeordnet ist, dass sich zwischen der Außenfläche des Lüftergehäuses (22) und einer Innenwand der weiteren Luftleiteinrichtung (52) ein in axialer Richtung (30) verlaufender Kanal ausbildet,
- die weitere Luftleiteinrichtung (52) eine Eintrittsöffnung (54) aufweist, die derart ausgebildet ist, dass das Kühlmittel im Wesentlichen entlang der axialen Richtung (30) der elektrischen Maschine (10) in den Kanal einströmt,
- die weitere Luftleiteinrichtung (52) derart ausgebildet ist, dass das Kühlmittel in axialer Richtung (30) entgegengesetzt gerichtet zu der Förderrichtung des Außenlüfters (14) durch den Kanal strömt,
- der Außenkühlmittelstrom von dem Außenlüfter (14) durch ein Kühlergehäuse (20) der elektrischen Maschine (10) führt, wobei eine Austrittsöffnung (50) des Kühlergehäuses (20) beabstandet zu der Eintrittsöffnung (24) der Luftleiteinrichtung (26) angeordnet ist,
**dadurch gekennzeichnet, dass**
- die Austrittsöffnung in einem Bereich der Antriebsseite der elektrischen Maschine und die Eintrittsöffnung an der Nicht-Antriebsseite der elektrischen Maschine angeordnet ist, und
- das Kühlmittel von dem Außenlüfter in die axiale Richtung umgelenkt wird.

2. Elektrische Maschine (10) nach Anspruch 1,
**dadurch gekennzeichnet, dass** die weitere Luftleiteinrichtung (52) und das Lüftergehäuse (22) einteilig ausgebildet sind.

3. Elektrische Maschine (10) nach Anspruch 1 oder 2,
**dadurchgekennzeichnet**, dass an einer Innenwand der weiteren Luftleiteinrichtung (52) und/oder an einer Innenwand des Lüftergehäuses (22) ein Geräuschdämmelement (58) angeordnet ist.

4. Elektrische Maschine (10) nach einem der Anspruche 1 bis 3, **dadurch gekennzeichnet, dass** an der Eintrittsöffnung (24) des Lüftergehäuses (22) und/oder an der Eintrittsöffnung (54) der weiteren Luftleiteinrichtung (52) ein Gitterelement (42, 44) angeordnet ist.

5. Verfahren zum Kühlen einer elektrischen Maschine (10), wobei die elektrische Maschine (10) einen Innenlüfter (12) und einen Außenlüfter (14) aufweist, die mit einer gemeinsamen Welle (16) der elektrischen Maschine (10) verbunden sind, der Innenlüfter (12) und der Außenlüfter (14) entlang einer axialen Richtung (30) der elektrischen Maschine (10) entgegengesetzte Förderrichtungen aufweisen und der Außenlüfter (14) in einem Lüftergehäuse (22) angeordnet ist, das eine Eintrittsöffnung (24) zum Einströmen eines Kühlmittels des Außenkühlmittelstroms aufweist durch
- Erzeugen eines Innenkühlkreislaufs mit dem Innenlüfter (12),
- Erzeugen eines vom Innenkühlkreislauf getrennten Außenkühlmittelstroms mit dem Außenlüfter (14),
- Führen des Kühlmittels in einem Leitungsabschnitt, der sich in radialer Richtung (28) der elektrischen Maschine (10) von der Eintrittsöffnung (24) zu dem Außenlüfter (14) hin erstreckt mit einer Luftleiteinrichtung (26) des Lüftergehäuses (22),
- Bereitstellen der Luftleiteinrichtung (26) durch eine Innenwand (32) des Lüftergehäuses (22) und ein Luftleitelement (34),
- Bereitstellen einer weiteren Luftleiteinrichtung (52) des Lüftergehäuses (22), die derart an einer Außenfläche des Lüftergehäuses (22) angeordnet ist, dass sich zwischen der Außenfläche des Lüftergehäuses (22) und einer Innenwand der weiteren Luftleiteinrichtung (52) ein in axialer Richtung (30) verlaufender Kanal ausbildet,
- Einströmen des Kühlmittels im Wesentlichen entlang der axialen Richtung (30) der elektrischen Maschine (10) in den Kanal von einer Eintrittsöffnung (54) der weiteren Luftleiteinrichtung (52),
- Strömen des Kühlmittels in axialer Richtung (30) entgegengesetzt gerichtet zu der Förderrichtung des Außenlüfters (14) durch den Kanal der weitere Luftleiteinrichtung (52),
- Führen des Außenkühlmittelstrom von dem Außenlüfter (14) durch ein Kühlergehäuse (20) der elektrischen Maschine (10) führt, wobei eine Austrittsöffnung (50) des Kühlergehäuses (20) beabstandet zu der Eintrittsöffnung (24) der Luftleiteinrichtung (26) angeordnet ist,
**gekennzeichnet durch**
- Bereitstellen der Austrittsöffnung in einem Bereich der Antriebsseite der elektrischen Maschine und der Eintrittsöffnung an der Nicht-Antriebsseite der elektrischen Maschine, und
- Umlenken des Kühlmittels von dem Außenlüfter in die axiale Richtung.

## Claims

1. Electrical machine (10) with
- an inner fan (12) in an inner coolant circuit,
- an outer fan (14) for creating an outer coolant flow separate from the inner coolant circuit, wherein
- the inner fan (12) and the outer fan (14) are connected to a common shaft (16) of the electrical machine (10),
- the inner fan (12) and the outer fan (14) have opposing directions of conveyance along an axial direction (30) of the electrical machine (10) and
- the outer fan (14) is disposed in a fan housing (22) which has an inlet opening (24) for an inward flow of a coolant of the outer coolant flow, wherein
- the fan housing (22) includes an air guidance device (26) which guides the coolant in a line section which extends in the radial direction (28) of the electrical machine (10) from the inlet opening (24) to the outer fan (14),
- the air guidance device (26) is formed by an inner wall (32) of the fan housing (22) and an air guidance element (34),
- the fan housing (22) includes a further air guidance device (52) which is disposed on an outer surface of the fan housing (22) such that a channel running in the axial direction (30) is embodied between the outer surface of the fan housing (22) and an inner wall of the further air guidance device (52),
- the further air guidance device (52) has an inlet opening (54) which is embodied such that the coolant flows into the channel essentially along the axial direction (30) of the electrical machine (10),
- the further air guidance device (52) is embodied such that the coolant flows through the channel in the axial direction (30) in the opposite direction to the direction of conveyance of the outer fan (14),
- the outer coolant flow leads from the outer fan (14) through a cooler housing (20) of the electrical machine (10), wherein an outlet opening (50) of the cooler housing (20) is disposed at a distance from the inlet opening (24) of the air guidance device (26),
**characterised in that**
- the outlet opening is disposed in an area of the drive side of the electrical machine and the inlet opening on the nondrive side of the electrical machine,
- the coolant is diverted by the outer fan in the axial direction.

2. Electrical machine (10) according to claim 1, **characterised in that** the further air guidance device (52) and the fan housing (22) are embodied in one piece.

3. Electrical machine (10) according to claim 1 or 2, **characterised in that** a sound-deadening element (58) is disposed on an inner wall of the further air guidance device (52) and/or on an inner wall of the fan housing (22).

4. Electrical machine (10) according to one of claims 1 to 3, **characterised in that** a grating element (42, 44) is disposed on the inlet opening (24) of the fan housing (22) and/or on the inlet opening (54) of the further air guidance device (52).

5. Method for cooling an electrical machine (10), wherein the electrical machine (10) has an inner fan (12) and an outer fan (14) which are connected to a common shaft (16) of the electrical machine (10), the inner fan (12) and the outer fan (14) have opposing directions of conveyance along an axial direction (30) and the outer fan (14) is disposed in a fan housing (22) which has an inlet opening (24) for an inward flow of a coolant of the outer coolant flow by
- creating an inner coolant with the inner fan (12) and
- creating an outer coolant flow separated from the inner coolant circuit with the outer fan (14),
- guidance of the coolant in a line section which extends in the radial direction (28) of the electrical machine (10) from the inlet opening (24) to the outer fan (14) with an air guidance device (26) of the fan housing (22).
- provision of the air guidance device (26) by an inner wall (32) of the fan housing (22) and an air guidance element (34),
- provision of a further air guidance device (52) of the fan housing (22) which is disposed on an outer surface of the fan housing (22) such that a channel running in the axial direction (30) is formed between the outer surface of the fan housing (22) and an inner wall of the further air guidance device (52),
- inflow of the coolant essentially along the axial direction (30) of the electrical machine (10) into the channel from the inlet opening (54) of the further air guidance device (52),
- flowing of the coolant in the axial direction (30), directed in the opposite direction to the direction of conveyance of the outer fan (14) through the channel of the further air guidance device (52),
- guiding the outer coolant flow from the outer fan (14) through a fan housing (20) of the electrical machine (10), wherein an outlet opening (50) of the fan housing (20) is disposed at a distance from the inlet opening (24) of the air guidance device (26),
**characterised by**
- provision of the outlet opening in an area of the drive side of the electrical machine and the inlet opening on the nondrive side of the electrical machine, and
- diverting the coolant from the outer fan in the axial direction.

## Revendications

1. Machine ( 10 ) électrique comprenant
- un ventilateur ( 12 ) intérieur dans un circuit de refroidissement intérieur,
- un ventilateur ( 14 ) extérieur de production d'un courant de fluide de refroidissement extérieur, distinct du circuit de refroidissement intérieur, dans laquelle
- le ventilateur ( 12 ) intérieur et le ventilateur ( 14 ) extérieur sont reliés à un arbre ( 16 ) commun de la machine ( 10 ) électrique,
- le ventilateur ( 12 ) intérieur et le ventilateur ( 14 ) extérieur ont des sens de circulation opposés le long d'une direction ( 30 ) axiale de la machine ( 10 ) électrique et
- le ventilateur ( 14 ) extérieur est disposé dans une carcasse ( 22 ) de ventilateur, qui a une ouverture ( 24 ) d'entrée d'un fluide réfrigérant du courant de fluide de refroidissement extérieur, dans laquelle
- la carcasse ( 22 ) du ventilateur comprend un dispositif ( 26 ) de conduite de l'air, qui conduit le fluide de refroidissement dans un tronçon de conduit qui s'étend dans la direction ( 28 ) radiale de la machine ( 10 ) électrique, de l'ouverture ( 24 ) d'entrée au ventilateur ( 14 ) extérieur,
- le dispositif ( 26 ) de conduite de l'air est formé par une paroi ( 32 ) intérieure de la carcasse ( 22 ) du ventilateur et par un élément ( 34 ) de conduite de l' air,
- la carcasse ( 22 ) du ventilateur comprend un autre dispositif ( 52 ) de conduite de l'air, qui est disposé sur une surface extérieure de la carcasse ( 22 ) du ventilateur de manière à former, entre la surface extérieure de la carcasse ( 22 ) du ventilateur et une paroi intérieure de l'autre dispositif ( 52 ) de conduite de l'air, un canal s'étendant dans la direction ( 30 ) axiale,
- l'autre dispositif ( 52 ) de conduite de l'air a une ouverture ( 54 ) d'entrée, qui est constituée de manière à ce que le fluide réfrigérant pénètre dans le canal sensiblement suivant la direction ( 30 ) axiale de la machine ( 10 ) électrique,
- l'autre dispositif ( 52 ) de conduite de l'air est constitué de manière à ce que le fluide réfrigérant s'écoule dans le canal dans la direction ( 30 ) axiale, dans le sens opposé au sens de circulation du ventilateur ( 14 ) extérieur,
- le courant de fluide de refroidissement extérieur part du ventilateur ( 14 ) extérieur dans une carcasse ( 20 ) de refroidisseur de la machine ( 10 ) électrique, une ouverture ( 50 ) de sortie de la carcasse ( 20 ) de refroidisseur étant à distance de l'ouverture ( 24 ) d'entrée du dispositif ( 26 ) de conduite de l'air, **caractérisée en ce que**
- l'ouverture de sortie est disposée dans une région du côté d'entraînement de la machine électrique et l'ouverture d'entrée du côté de non entraînement de la machine électrique et
- le fluide réfrigérant est dévié par le ventilateur extérieur dans la direction axiale.

2. Machine ( 10 ) électrique suivant la revendication 1, **caractérisée en ce que** l'autre dispositif ( 52 ) de conduite de l'air et la carcasse ( 22 ) du ventilateur sont constitués d'une seule pièce.

3. Machine ( 10 ) électrique suivant la revendication 1 ou 2, **caractérisée en ce qu'**un élément ( 58 ) d'atténuation du bruit est monté sur une paroi intérieure de l'autre dispositif ( 52 ) de conduite de l'air et/ou sur une paroi intérieure de la carcasse ( 22 ) du ventilateur.

4. Machine ( 10 ) électrique suivant l'une des revendications 1 à 3
**caractérisée en ce qu'**un élément ( 42, 44 ) de grille est monté sur une ouverture ( 24 ) d'entrée de la carcasse ( 22 ) du ventilateur et/ou sur l'ouverture ( 54 ) d'entrée de l'autre dispositif ( 52 ) de conduite de l'air.

5. Procédé de refroidissement d'une machine ( 10 ) électrique, la machine ( 10 ) électrique ayant un ventilateur ( 12 ) intérieur et un ventilateur ( 14 ) extérieur, qui sont reliés à un arbre ( 16 ) commun de la machine ( 10 ) électrique, le ventilateur ( 12 ) intérieur et le ventilateur ( 14 ) extérieur ayant, suivant une direction ( 30 ) axiale de la machine ( 10 ) électrique, des sens de circulation opposés et le ventilateur ( 14 ) extérieur étant disposé dans une carcasse ( 22 ) de ventilateur, qui a une ouverture ( 24 ) d'entrée d'un fluide réfrigérant du courant de fluide réfrigérant extérieur par
- production d'un circuit de refroidissement intérieur par le ventilateur ( 12 ) intérieur,
- production d'un courant de fluide de refroidissement extérieur, distinct du circuit de refroidissement intérieur, par le ventilateur ( 14 ) extérieur,
- conduite du fluide réfrigérant dans un tronçon de conduit, qui s'étend, dans la direction ( 28 ) radiale de la machine ( 10 ) électrique, de l'ouverture ( 24 ) d'entrée au ventilateur ( 14 ) extérieur, par un dispositif ( 26 ) de conduite de l'air de la carcasse ( 22 ) du ventilateur,
- obtention du dispositif ( 26 ) de conduite de l'air par une paroi ( 32 ) intérieure de la carcasse ( 22 ) du ventilateur et par un élément ( 34 ) de conduite de l' air,
- obtention d'un autre dispositif ( 52 ) de conduite de l'air de la carcasse ( 22 ) du ventilateur, qui est disposé sur une surface extérieure de la carcasse ( 22 ) du ventilateur de manière à former, entre la surface extérieure de la carcasse ( 22 ) du ventilateur et une paroi intérieure de l'autre dispositif ( 52 ) de conduite de l'air, un canal s'étendant dans la direction ( 30 ) axiale,
- entrée du fluide réfrigérant sensiblement suivant la direction ( 30 ) axiale de la machine ( 10 ) électrique dans le canal par une ouverture ( 54 ) d'entrée de l'autre dispositif ( 52 ) de conduite de l'air,
- écoulement du fluide réfrigérant dans la direction ( 30 ) axiale en sens opposé au sens de circulation du ventilateur ( 14 ) extérieur dans le canal de l'autre dispositif ( 52 ) de conduite de l'air,
- conduite du courant de fluide de refroidissement extérieur par le ventilateur ( 14 ) extérieur dans une carcasse ( 20 ) de refroidisseur de la machine ( 10 ) électrique, une ouverture ( 50 ) de sortie de la carcasse ( 20 ) du refroidisseur étant à distance de l'ouverture ( 24 ) d'entrée du dispositif ( 26 ) de conduite de l'air, **caractérisé par**
- on met l'ouverture de sortie dans une région du côté d'entraînement de la machine électrique et l'ouverture d'entrée du côté de non entraînement de la machine électrique et
- on dévie le fluide de refroidissement par le ventilateur extérieur dans la direction axiale.
